# EUROPEAN PATENT APPLICATION

(11) **EP 3 406 680 A1**
(43) Date of publication of application: **28.11.2018**
(21) Application number: 16886483.3
(22) Date of filing: 07.12.2016
(51) Int. Cl.: C09D 133/00, B05D 3/10, B32B 27/30, C09D 7/12, C09D 127/12, C09D 183/04

(54) **TWO-COMPONENT COATING AGENT AND COATED-BODY PROTECTION METHOD**

(30) Priority: 18.01.2016 JP 2016007116
(71) Applicant: SSK Protect Co., Ltd., Kasugai-shi, Aichi 486-0926 (JP)
(72) Inventor: SASAKI Hiroshi, Kasugai-shi Aichi 486-0926 (JP); YASUTAKE Ryuichiro, Kasugai-shi Aichi 486-0926 (JP); TSUSHIMA Masamichi, Kasugai-shi Aichi 486-0926 (JP)
(74) Representative: Rings, Rolf
(86) International application number: PCT/JP2016/086422
(87) International publication number: WO 2017/126244

(57) **Abstract**

To provide a two-parts coating agent which can strongly prevent adhesion of a stain and deterioration of a surface of covering materials such as leather and cloth for a long time and can form a coating having, for example, an excellent water resistance, abrasion resistance, and texture on the surface of the covering materials, a two-parts coating agent includes at least a main agent and a hardener, the main agent including fluororesin, 3 to 20% by mass of acrylic, 3 to 20% by mass of silicone, 40% to 90% by mass of water containing the fluororesin, and 3 to 50% by mass of a mineral oil relative to the total mass of the main agent, the hardener including a bridging component including a carbodiimide compound, wherein a ratio of mass of the fluororesin/mass of the bridging component after mixing of the main agent and the hardener is 1 to 4.

## Description

### Technical Field

The present invention relates to a two-parts coating agent which is preferably used for forming a coating having, for example, excellent stain resistance, abrasion resistance, water resistance, and texture on a surface of a covering material and a method for protecting a covering material using the same.

### Background Art

Cloth sheets or leather sheets are conventionally used in, for example, a seat of an automobile. Specifically, various types of finishing have been investigated in view of prevention of stain and abrasion and improvement of texture with respect to surfaces of the leather sheets.

The most orthodox finishing of leather surfaces is plain finishing. In the plain finishing, native color and luster of leather is fully brought out by simply rolling or buffing without using a colorant or a finishing agent and in some cases using only a small amount of dyes. In some cases, finishing is performed without using any dyeing to produce so called case leather. The plain finishing brings out a feel with which leather is naturally equipped. It offers excellent feel of touch and possesses beauty of appearance. However, a drawback of the plain finishing is that not only beautiful qualities but also imperfections are clarified. Other drawbacks are poor water resistance and stain susceptibility due to the lack of coating and, in addition, the stain is conspicuous. Accordingly, meticulous care is required for maintenance in the plain finishing.

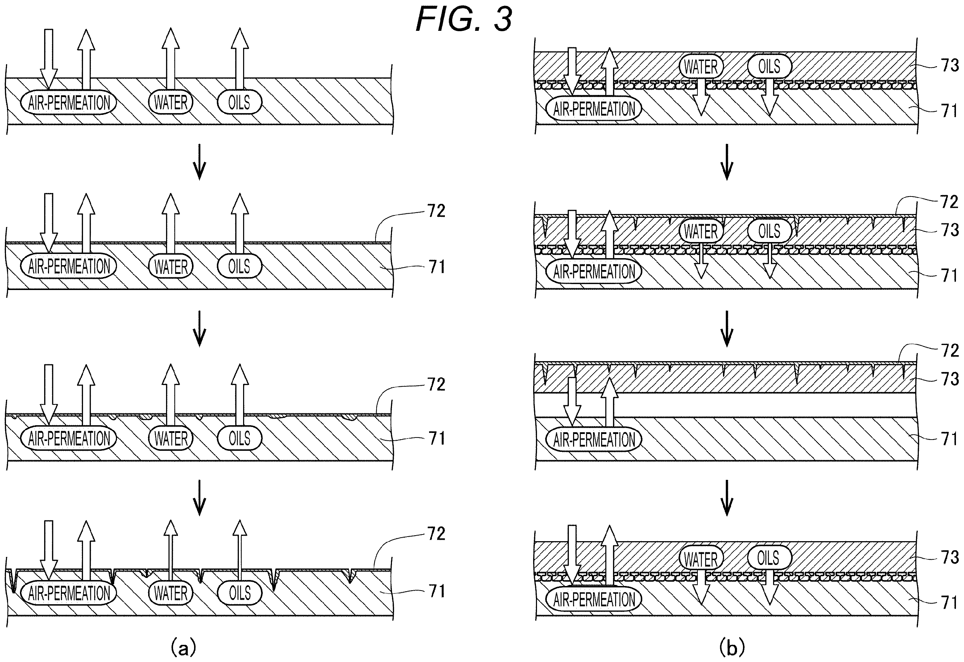

Fig. 3(a) shows a schematic view of changes of plain finished leather with time. In this plain finishing, a surface of leather 71 is not coated with any colorant or finishing materials, and thus the leather is breathable. However, water and oils easily exude and evaporate with time. A stain 72 gradually adheres to the surface of the leather 71 with time, and the stain 72 then permeates deep section of the leather 71 with time. Consequently, the stain 72 leads to cracking in the leather 71.

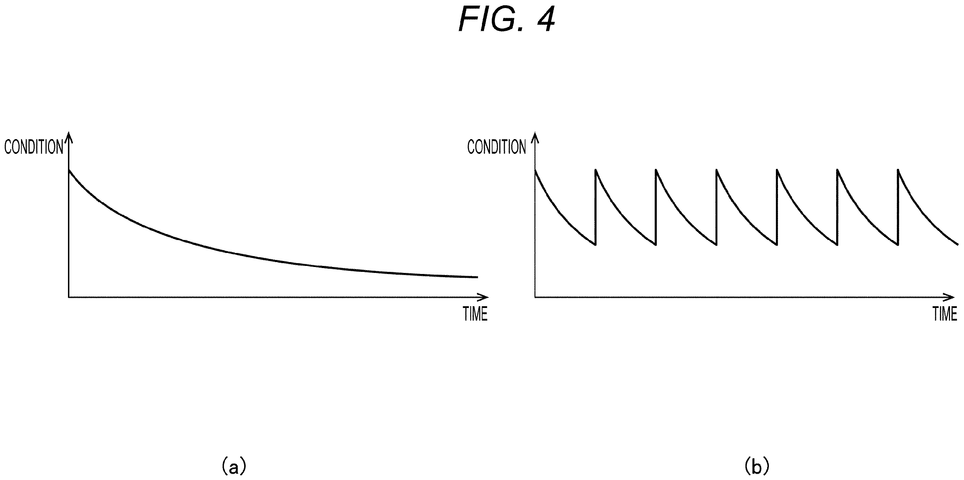

Fig. 4(a) shows changes versus time in conditions of the plain finished leather 71. In the plain finishing, since no outer coating is applied, for example, the above-mentioned cracking, wrinkling, adhesion of the stain 72, moisture desorption and hardening, and grazing progress steadily with time.

Dye finishing (aniline finishing) is widely used as another finishing method for a leather surface. In the dye finishing, the surface is colored by a thin coating so that proper expression of grain of leather (a surface of leather) should be brought out. Accordingly, the dye finishing can bring out a natural feel to the touch and in appearance and specifically is frequently used in, for example, a high-grade bag. However, the dye finishing suffers from problems that water resistance is inferior, the color is easily removed, and the color and luster easily change with time.

Pigment finishing is frequently used specifically in leather seats of an automobile as a finishing method for a leather surface (e.g., see Patent Literature 1). In the pigment finishing, a surface of leather is coated with a pigment. The pigment finishing provides advantages that brilliant colors are easily achieved, durability is superior, and the color is not lost easily. However, the pigment finishing suffers from problems that a natural feel to the touch may not be achieved and a natural feel with which the leather is inherently equipped is difficult to be perceived.

Fig. 3(b) shows a schematic view of changes with time of leather when a surface of the leather 71 is coated with a general protective coating 73 of dyes or pigments. Of course, even if the surface of the leather 71 is coated with the protective coating 73, the leather is also breathable. Water and oils does not easily exude and evaporate. However, breathability is inferior. Moisture desorption, hardening, and grazing of the leather 71 can be prevented by the protective coating 73 to some extent. However, the stain 72 gradually accumulates on a surface of the protective coating 73 with time, which leads to gradual stiffening of protective coating 73. In addition, the protective coating 73 exfoliates spontaneously or by cleaning with time due to the stiffening. Accordingly, to compensate for the exfoliated protective coating 73, re-coating of the protective coating 73 is required.

Fig. 4(b) shows changes versus time in conditions of the leather 71 coated with the general protective coating 73 of dye or pigment. The above-mentioned maintenance operation of re-coating with the protective coating 73 should be performed at intervals of several months to several years, which can lead to progressive deterioration of the surface of the leather 71.

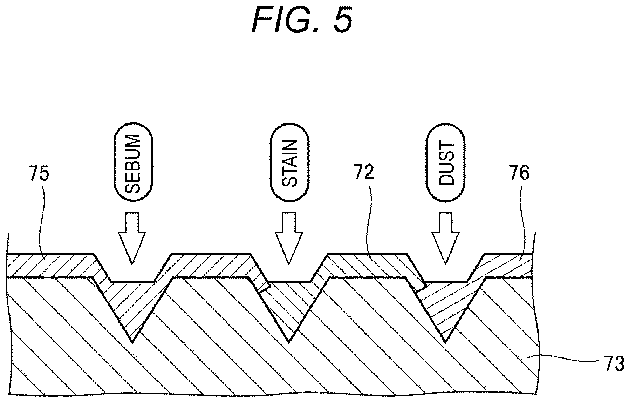

Fig. 5 shows a detailed image of a surface coated with the protective coating 73. In addition to the stain 72, for example, sebum 75 and dust 76 adhere to the protective coating 73, resulting in sheen and muddiness. Specifically, if the leather 71 is used in, for example, a seat of an automobile, static electricity is easily developed in the automobile, leading to adsorption of the dust 76 onto the surface. If it rains, the surface is readily permeated with the moisture-containing dust 76.

### Citation List

### Patent Literature

Patent Literature 1: JP 01-170700 A

### Summary of Invention

### Technical Problem

An object of the present invention, which has been made in view of the above-described problems, is to provide a two-parts coating agent which can strongly prevent adhesion of a stain and deterioration of a surface of covering materials such as leather and cloth for a long time and can form a coating having, for example, an excellent water resistance, abrasion resistance, and texture on the surface of the covering materials, and a method for protecting a covering material using the agent.

### Solution to Problem

The present inventors have made a novel finding that a coating having, for example, an excellent water resistance, abrasion resistance, and texture can be formed on a surface of a covering material by mixing a main agent and the above-described hardener so that a ratio of mass of fluororesin/mass of a bridging component after the mixing is prepared within a range of 1 to 4, leading to solution to the above problems.

A two-parts coating agent according to a first invention is characterized in that the two-parts coating agent includes at least a main agent and a hardener, the main agent including fluororesin, 3 to 20% by mass of acrylic, 3 to 20% by mass of silicone, 40% to 90% by mass of water containing the above-described fluororesin, and 3 to 50% by mass of a mineral oil relative to the total mass of the main agent, and the hardener including a bridging component including a carbodiimide compound, wherein a ratio of mass of the fluororesin/mass of the bridging component after mixing of the above-described main agent and the above-described hardener is 1 to 4.

A two-parts coating agent according to a second invention is characterized in that a ratio of mass of the above-described hardener/mass of the above-described main agent is 0.1 to 0.07 in the first invention.

A two-parts coating agent according to a third invention is characterized in that the two-parts coating agent is used for preventing adhesion of a stain by forming a coating on a covering material including a leather material or a cloth material in the first or second invention.

A two-parts coating agent according to a fourth invention is characterized in that the above-described carbodiimide compound is a polyfunctional carbodiimide in any one of the first to third inventions.

A method for protecting a covering material according to a fifth invention is characterized in that the method for protecting a covering material includes forming a coating with the two-parts coating agent of any one of the first to fourth inventions on a covering material to protect the covering material, the method including: a main agent coating step of coating the above-described main agent onto a surface of the covering material, and a hardener coating step of coating the above-described hardener onto the surface of the main agent which is coated in the above-described main agent coating step, wherein adhesion of a stain is prevented by the coating hardened by the above-described hardener which is coated in the above-described hardener coating step.

A covering material according to a sixth invention is characterized in that a coating is formed on a surface of the covering material using the two-parts coating agent of any one of the first to fourth invention.

### Advantageous Effect of Invention

According to the present invention including the above-described constitution, adhesion of a stain can be strongly prevented by a fluorine coating formed on a covering material, resulting in long-term prevention of deterioration of the surface of the covering material. The present invention enables to form a fluorine coating having, for example, an excellent water resistance, abrasion resistance, and texture on the surface of the covering material.

### Brief Description of Drawings

Fig. 1 is a schematic view of a fluorine coating formed on a surface of a covering material using a two-parts coating agent according to the present invention.
Fig. 2 shows changes versus time in conditions of a covering material on which a fluorine coating is formed using a two-parts coating agent according to the present invention.
Fig. 3(a) is a schematic view showing changes with time of plain finished leather. Fig. 3(b) is a schematic view of leather onto which a general protective coating of a dye or a pigment is coated.
Fig. 4(a) shows changes versus time in conditions of plain finished leather. Fig. 4(b) shows changes versus time in conditions of leather 71 coated with a protective coating of a dye or a pigment.
Fig. 5 is a detailed illustration showing a surface onto which a conventional protective coating is coated.

### Description of Embodiments

A two-parts coating agent according to the present invention is described below in detail with reference to drawings.

A two-parts coating agent according to the present invention includes at least a main agent and a hardener.

The main agent is a material hardened to achieve, for example, an expected antifouling property, abrasion resistance, and water resistance. The main agent includes an acrylic resin, a urethane resin, silicone, fluorine-containing water, a mineral oil, and polysilazane.

The acrylic resin is a polymer of acrylates or methacrylates and is a highly transparent amorphous synthetic resin. Representative examples of the acrylic resin include polymethyl methacrylate resin (PMMA) having a degree of polymerization of about 10000 to about 15000. Such an acrylic resin improves specifically adhesiveness to play a role in improving abrasion resistance.

The acrylic resin is added to give a content of 3 to 20 mass% relative to the total mass of the main agent. If the content of the acrylic resin is less than 3 mass%, it is not effective in the above-described improvement of abrasion resistance specific to the acrylic resin. On the other hand, if the content of the acrylic resin exceeds 20 mass%, an additional acrylic resin achieves no further improvement in the above-described effect and is uneconomical in material costs. Accordingly, the content of an acrylic resin is defined to be 3 to 20 mass% relative to the total mass of the main agent.

Representative examples of the urethane resin include polyurethane. The urethane resin is formed by condensation reaction between compounds having an isocyanate group and a hydroxyl group. The urethane resin may be any materials as long as it is a polymer having a urethane bond. Such a urethane resin improves specifically adhesiveness to play a role in improving abrasion resistance.

The urethane resin is added to give a content of 10 mass% or less relative to the total mass of the main agent. If the content of the urethane resin exceeds 10 mass%, an additional urethane resin achieves no further improvement in the above-described effect and is uneconomical in material costs. Accordingly, the content of a urethane resin is defined to be 10 mass% or less relative to the total mass of the main agent. The urethane resin may not necessarily be contained in the main agent.

Silicone is one of synthetic polymers and is a compound having a main backbone including a siloxane bond. Such a silicone plays a role in improving specifically stain resistance and texture.

The silicone is added to give a content of 3 to 20 mass% relative to the total mass of the main agent. If the content of the silicone is less than 3 mass%, the above-described effect of the silicone on improvement of stain resistance and texture cannot be exerted. On the other hand, if the content of the silicone exceeds 20 mass%, an additional silicone achieves no further improvement in the above-described effect and is uneconomical in material cost. Accordingly, the content of silicone is defined to be 3 to 20 mass% relative to the total mass of the main agent.

Fluorine-containing water is water containing fluororesin. The fluororesin is a synthetic resin formed by polymerizing olefins containing fluoride. Representative examples include polytetrafluoroethylene (tetrafluoroethylene polymer). In the fluorine-containing water, such fluororesin is dissolved in water in a certain proportion. In the following descriptions in examples, a content of the fluororesin is, by way of example, 10 mass% relative to the total mass of water, but is not limited thereto. The fluororesin may be contained in any proportion.

A content of the fluorine-containing water in which fluororesin is dissolved relative to the total mass of the main agent is not specifically limited. The fluorine-containing water may be contained in any proportion. In the following description, a content of the fluorine-containing water is, by way of example, 40 to 90 mass% relative to the total mass of the main agent. The fluororesin exerts various functions by forming a bridged structure with a bridging component contained in a hardener described below. Accordingly, a content of the fluorine-containing water relative to the main agent and a content of the fluororesin relative to the fluorine-containing water are determined with reference to the bridging component contained in the hardener described below.

A mineral oil is an oil from mineral resources such as petroleum (crude oil), natural gas, and coal and is a hydrocarbon compound from underground resources. In the present invention, the mineral oil includes, for example, oils belonging to vegetable oil and animal oils and fats. Such a mineral oil plays a role in improving specifically workability.

The mineral oil is added to give a content of 3 to 50 mass% relative to the total mass of the main agent. If the content of the mineral oil is less than 3 mass%, the above-described effect of the mineral oil on improvement of workability cannot be exerted. On the other hand, if the content of the mineral oil exceeds 50 mass%, an additional mineral oil achieves no further improvement in the above-described effect and is uneconomical in material cost. Accordingly, the content of a mineral oil is defined to be 3 to 50 mass% relative to the total mass of the main agent.

Polysilazane is also used as a coating agent and may be added in a small amount. The polysilazane is not essential and may not necessarily be contained.

To the main agent, other components may, of course, be added in addition to the above-described components if necessary. For example, a hydrocarbon solvent, a nonionic surfactant, an anionic surfactant, a thickener, and an antiseptic may optionally be added to the main agent.

A hardener includes a carbodiimide compound or isocyanate as a bridging component. The hardener includes water excluding the bridging component. The carbodiimide compound facilitates formation of a fluorine coating between a carboxylic acid contained in the carbodiimide compound and fluororesin in the fluorine-containing water contained in the main agent.

The bridging component is included in the hardener in an amount of 38 to 42 mass% relative to the total mass of the hardener. If the bridging component is less than 38% relative to the total mass of the hardener, an amount of carboxylic acids for reacting with fluororesin after mixing with the main agent is insufficient. Accordingly, a bridged structure cannot be formed effectively, which results in ineffective formation of a fluorine coating on a surface of a covering material. On the other hand, if the bridging component exceeds 42% relative to the total mass of the hardener, an additional bridging component achieves no further improvement in the above-described effect and is uneconomical in material cost.

Isocyanate also facilitates formation of a fluorine coating between the isocyanate and fluororesin in the fluorine-containing water contained in the main agent on a covering material.

A content of the bridging component relative to the total mass of the hardener is not limited to the above-described range. The content of the bridging component is specifically determined with reference to the fluororesin contained in the main agent.

A ratio of mass of the fluororesin/mass of the bridging component after mixing of a main agent and a hardener is adjusted to be 1 to 4. Accordingly, a fluorine coating can preferably be formed on a covering material, which leads to improvement of abrasion resistance of stain resistance and water resistance and improvement of texture and workability.

On the other hand, if a ratio of mass of the fluororesin/mass of the bridging component after mixing of the main agent and the hardener is less than 1, or exceeds 4, a preferable fluorine coating cannot be formed, which results in failure to achieve the above-described expected effect. Accordingly, a ratio of mass of fluororesin/mass of a bridging component after mixing of a main agent and a hardener is defined to be 1 to 4.

In order to adjust the ratio of mass of the fluororesin/mass of the bridging component after mixing of the main agent and the hardener within the above-described range, adjustments in a mixing ratio of the main agent and the hardener, a content of the fluorine-containing water contained in the main agent, a content of the fluororesin contained in the fluorine-containing water, and a content of the bridging component in the hardener are made. In the adjustment in the mixing ratio of the hardener and the main agent in the adjustment step, a ratio of mass of the hardener/mass of the main agent is preferably 0.1 to 0.07, but is not limited thereto. The hardener and the main agent may be mixed at any ratio. Specifically, when the ratio of mass of the hardener/mass of the main agent is 0.1 to 0.07, an advantage is easy operability in mixing of the hardener and the main agent.

Next, a method for using a two-parts coating agent according to the present invention is described.

The two-parts coating agent is distributed and sold in a form in which a main agent and a hardener are separately included in different containers. A consumer purchased the two-parts coating agent mixes the main agent and the hardener. A mixing ratio of the main agent and the hardener is determined in advance based on the above-described mass ratio of the fluororesin and the bridging component. When the main agent and the hardener are mixed, the mixture is preferably, for example, stirred.

After mixing, the mixture is blended so that a ratio of mass of the fluororesin/mass of the bridging component is 1 to 4 as described above.

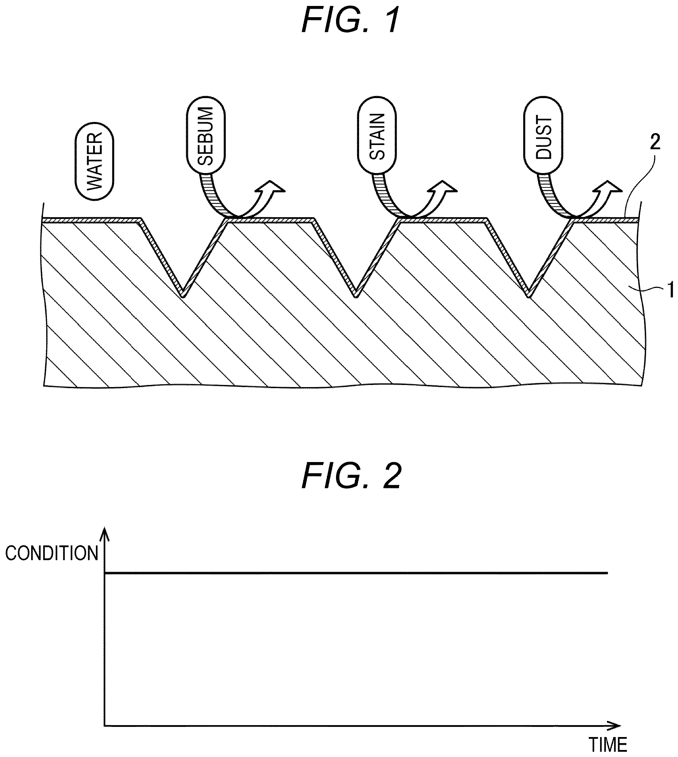

A consumer applies the mixture to, for example, leather or cloth as a covering material on which a coating is desired to be formed. As a result, a bridged structure is formed on the surface of the covering material. A reaction between fluororesin and a bridging component then further proceeds with time to form a fluorine coating 2 including the above-described bridged structure on the surface of a covering material 1 as shown in Fig. 1. The fluorine coating 2 is a thin film. If the covering material 1 is made of a flexible material, the fluorine coating 2 coated onto the covering material 1 can follow. Even if the covering material 1 has minute and crowded pebbles or undulations on the surface as shown in Fig. 1 and has considerable flexibility, the fluorine coating 2 is formed along with the pebbles.

The covering material 1 is of course breathable through the fluorine coating 2. When a stain is stayed on or adhered to the surface of the fluorine coating 2, the stain can be almost completely removed by gentle wiping with, for example, a wet cloth. The fluorine coating 2 can achieve a high stain resistance in which a stain with an oil-based ballpoint pen cannot adhere. The fluorine coating 2 can also effectively prevent adhesion of sebum and dust which are problematic in prior art. The reason is that the fluorine coating 2 can prevent production of static electricity.

The fluorine coating 2 can also achieve water resistance, leading to effective water repellency. Water resistance of the present invention having the fluorine coating 2 can be about 6 times greater than that of the covering material 1 without the fluorine coating 2.

The fluorine coating 2 can improve abrasion resistance, which is an ability to withstand rubbing, and is preferred in workability in coating onto the covering material 1, leading to an easy maintenance operation. In addition, the covering material 1 can be covered with very thin film of the fluorine coating 2. Accordingly, texture of leather and feel to the touch are not impaired by the fluorine coating 2 formed on the covering material 1.

Fig. 2 shows changes versus time in conditions of the covering material 1 when the fluorine coating 2 was formed on the covering material 1 using a two-parts coating agent according to the present invention. It shows that the condition scarcely deteriorated with time. Moisture desorption, hardening, grazing, and adhesion of a stain can be significantly prevented and the stain adhered can be removed by an easy maintenance operation. Accordingly, a clean condition can be maintained for more than 3 years. That is, hardness once achieved by the fluorine coating 2 formed on the covering material 1 can be maintained for an extended period of time. In addition, a large-scale maintenance operation such as re-covering of coating required for pigment finishing as shown in Fig. 4(b) can be eliminated to avoid damages to the surface material of the covering material 1.

Specifically, when the covering material 1 is used for a seat of an automobile, in many cases, the covering material 1 receives harsh treatment because drivers and passengers get on and off the seat. In this situation, properties of leather as the covering material 1 (breathability, oil retention, and moisture retention) can be maintained and deterioration of the leather surface can be effectively prevented.

### Example 1

Specific examples of two-parts coating agents according to the present invention are described below in detail.

First, samples of Examples of the present invention 1 to 9 and Comparative Examples 1 to 6 were prepared by combining main agents and hardeners constituting the two-parts coating agents as shown in the following Table 1.

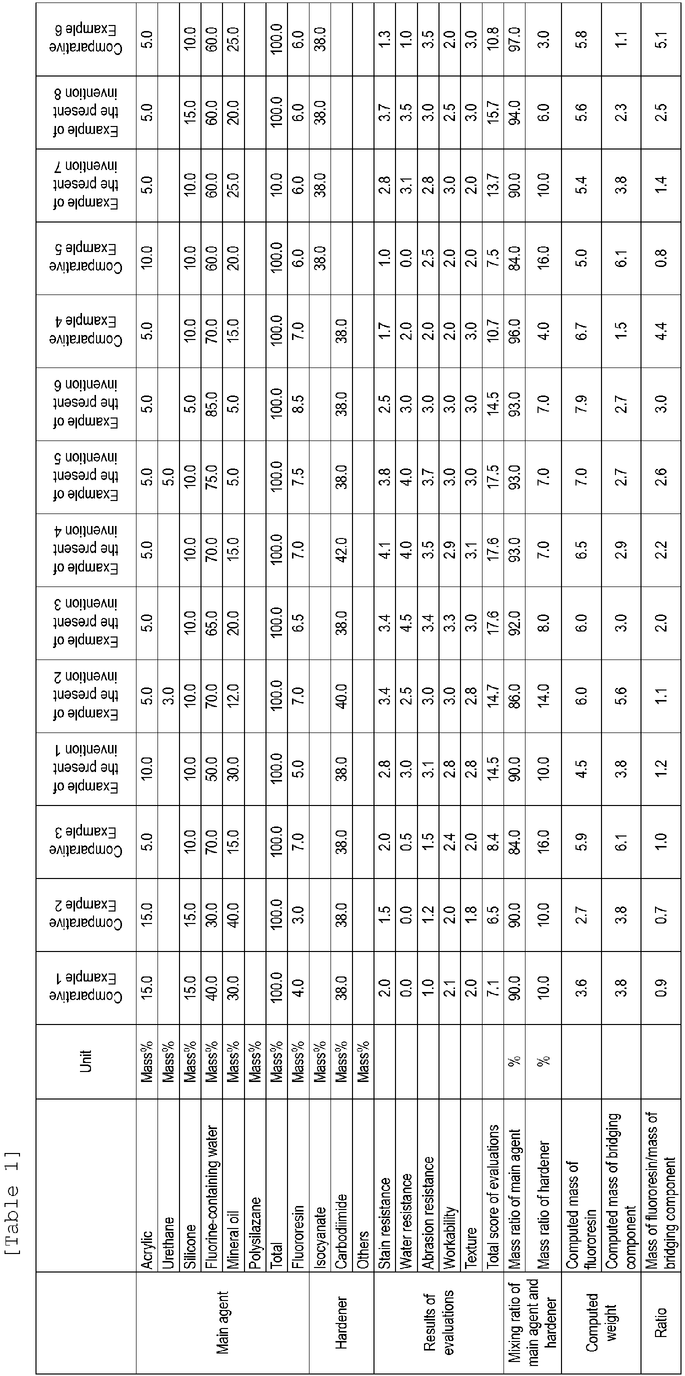

The main agent was produced by preparing the content of each of the acrylic resin, urethane resin, silicone, fluorine-containing water, and mineral oil. The proportion of the fluororesin contained in the fluorine-containing water was 10 mass% relative to the total mass of the fluorine-containing water. The hardener was produced by preparing the content of each of isocyanate and a carbodiimide compound contained in the hardener. The proportion of the bridging component such as a carbimide compound contained in the hardener was 38 to 42% as shown in Table 1.

Next, the thus prepared main agents and hardeners were mixed based on the mass ratio of main agent (%) and the mass ratio of hardener (%) as shown in Table 1. Next, the mixture of the main agent and the hardener was coated onto a covering material 1. The covering material 1 onto which the mixture was coated was white leather. Time of drying to the touch was 3 to 5 minutes.

Next, the samples were tested for evaluating the following 5 properties. The properties for the testing were stain resistance, water resistance, durability, workability, and texture.

The stain resistance test evaluates susceptibility to staining. With respect to the stain resistance, to white leather as the covering material 1 in which a sample was applied to the surface, stains were purposely adhered by writing graffiti with an oil-based ballpoint pen. The surface of the covering material 1 on which graffiti was written with the oil-based ballpoint pen was wiped with a damp microfiber cloth, and then removal rate of the stain with the oil-based ballpoint pen was evaluated. In this evaluation of removal rate of stain, only half of the area on which graffiti was written with the oil-based ballpoint pen was wiped with damp cloth and the other half was not wiped so that removal rate might be easily perceived visually. The removal rate of stain was assessed by external visual observation and stain resistance was evaluated using scores within a range of 1 to 5. A higher score of the stain resistance refers to a higher removal rate of stain. Evaluation was made by 2 judges by external observation and the evaluation scores recorded by the judges were averaged to obtain the final evaluation score.

Water resistance was evaluated according to JIS K 6550. First, black leather as the covering material 1 in which the sample were applied to the surface was scrubbed with a sponge containing a mild alkaline degreaser, and then the degreaser was wiped off. The portion where the degreaser was wiped off was then sprayed with water and a water-repellent state was evaluated. If the water sprayed permeated the covering material 1, the material was in a hydrophilic state. That is, the material lacked water repellency and was rated poor in water resistance. On the other hand, if the water sprayed did not permeate the covering material 1 and formed isolated nearly hemispherical droplets, the material was water repellent and rated good in water resistance. With respect to a water-repellent state of the water splayed, water resistance was evaluated by external visual observation and using scores within a range of 1 to 5 (to 1 decimal place). A higher score of the water resistance refers to a higher water repellency. Evaluation was made by 2 judges by external observation and the evaluation scores recorded by the judges were averaged to obtain the final evaluation score.

Durability (abrasion resistance) is an index showing duration of a coated fluorine coating and was evaluated according to JIS K 6547: color fastness to rubbing of leathers. With respect to the durability, to white leather as the covering material 1 in which a sample was applied to the surface, stains were purposely adhered by writing graffiti with an oil-based ballpoint pen. The surface of the covering material 1 on which graffiti was written with the oil-based ballpoint pen was pressed and firmly rubbed with a piece of wood for 11,000 times. After the rubbing, dye-transfer rate was evaluated. The dye-transfer rate was assessed by evaluating transfer of the ink color of the oil-based ballpoint pen along the direction of the reciprocating motion of rubbing in the rubbing operation. The dye-transfer rate was evaluated by external visual observation and durability was evaluated using scores within a range of 1 to 5. A higher score of durability refers to a lower dye-transfer rate. Evaluation was made by 2 judges by external observation and the evaluation scores recorded by the judges were averaged to obtain the final evaluation score.

Workability is an index showing easiness of working at an working place for forming a fluorine coating 2 by coating a main agent and a hardener constituting a two-parts coating agent. With respect to the workability, a suitable amount of a mixture of a main agent and a hardener was applied to the above-described the covering material 1 and coated manually. The workability was evaluated by judges who actually performed the manual coating operation using scores within a range of 1 to 5. A higher score refers to better workability. Evaluation was made by 2 judges by performing the working operations and the evaluation scores recorded by the judges were averaged to obtain the final evaluation score.

With respect to texture, the fluorine coating 2 formed on the covering material 1 was examined by touch and the result was shown. The texture indicates changes in a feel of touch of the surface. The texture was evaluated by judges who examined the fluorine coating 2 by touch using scores within a range of 1 to 5. A higher score refers to better texture. Evaluation was made by 2 judges by examination by touch and the evaluation scores recorded by the judges were averaged to obtain the final evaluation score.

Components of main agents and hardeners are shown in Table 1. In rows of main agents, contents of fluororesin are shown in the bottom row. The content of fluororesin is shown in mass% relative to the total mass of the main agent. Since the fluororesin was contained in fluorine-containing water in an amount of 10% relative to the total mass of water, 10% of the amount of fluorine-containing water (mass%) is equal to the content of the fluororesin (mass%) relative to the total mass of the main agent.

A mixing ratio of a main agent and a hardener is defined by a mass ratio of the main agent and the hardener used in mixing. With respect to each of Examples of the present invention and each of Comparative Examples, a computed mass of fluororesin and a computed mass of isocyanate or a carbodiimide compound as a bridging component in a hardener are also shown in Table 1. As used herein, a computed mass of fluorine refers to the following: (mass ratio of a main agent) × (mass% of fluororesin relative to the total mass of the main agent). A computed mass of a bridging component in a hardener refers to the following: (mass ratio of a hardener) × (mass% of a bridging component in the hardener).

A ratio of mass of fluororesin/mass of a bridging component after mixing of a main agent and a hardener is represented as follows: (a computed mass of the fluororesin)/(a computed mass of the bridging component). The ratio is also shown in Table 1.

In each of Examples of the present invention 1 to 8, a ratio of mass of the fluororesin/mass of the bridging component falls within a range of 1 to 4. On the other hand, in each of Comparative Examples 1 to 3, and 5, a ratio of mass of the fluororesin/mass of the bridging component is less than 1. In each of Comparative Examples 4 and 6, a ratio of mass of the fluororesin/mass of the bridging component exceeds 4.

In each of Examples of the present invention 1 to 8, all of stain resistance, water resistance, durability, workability, and texture were excellent and the evaluation score of each of the properties for the evaluation was at least 2.5. The evaluation score of 2.5 is the lowest score capable of satisfying performance required for commercialization. The sum of the evaluation scores of stain resistance, water resistance, durability, workability, and texture was at least 13.7, which was a favorable score.

On the other hand, in Comparative Examples 1 to 6, at least one of the scores of stain resistance, water resistance, durability, workability, and texture was less than 2.5. The sum of the evaluation scores of stain resistance, water resistance, durability, workability, and texture was less than 13.7. It is shown that the fluorine coating 2, in which all of the stain resistance, water resistance, durability, workability, and texture are improved, can be formed by preparing a ratio of mass of fluororesin/mass of a bridging component within a range of 1 to 4.

Specifically, when a ratio of mass of fluororesin/mass of a bridging component was within a range of 1.8 to 2.7, the sum of the evaluation scores exceeded 17.6. Accordingly, the fluorine coating 2 was suitably formed on the covering material 1, leading to more remarkable effects in improving abrasion resistance of stain resistance and water resistance and improving texture and workability.

### Reference Signs List

- 1: Covering material
- 2: Fluorine coating
- 71: Leather
- 73: Protective coating
- 75: Sebum
- 76: Dust

## Claims

1. A two-parts coating agent comprising at least a main agent and a hardener,
the main agent comprising fluororesin, 3 to 20% by mass of acrylic, 3 to 20% by mass of silicone, 40% to 90% by mass of water containing the fluororesin, and 3 to 50% by mass of a mineral oil relative to the total mass of the main agent, and
the hardener comprising a bridging component comprising a carbodiimide compound,
wherein a ratio of mass of the fluororesin/mass of the bridging component after mixing of the main agent and the hardener is 1 to 4.

2. The two-parts coating agent according to claim 1,
wherein the ratio of mass of the hardener/mass of the main agent is 0.1 to 0.07.

3. The two-parts coating agent according to claim 1 or 2,
wherein the two-parts coating agent is used for preventing adhesion of a stain by forming a coating on a covering material comprising a leather material or a cloth material.

4. The two-parts coating agent according to any one of claims 1 to 3,
wherein the carbodiimide compound is a polyfunctional carbodiimide.

5. A method for protecting a covering material comprising forming a coating with the two-parts coating agent of any one of claims 1 to 4 on a covering material to protect the covering material, the method comprising:
a main agent coating step of coating the main agent onto a surface of the covering material, and
a hardener coating step of coating the hardener onto the surface of the main agent which is coated in the main agent coating step,
wherein adhesion of a stain is prevented by the coating hardened by the hardener which is coated in the hardener coating step.

6. A covering material,
wherein a coating is formed on a surface of the covering material using the two-parts coating agent according to any one of claims 1 to 4.
